# EUROPÄISCHE PATENTSCHRIFT

(11) **EP 2 141 429 B1**
(45) Veröffentlichungstag und Bekanntmachung des Hinweises auf die Patenterteilung: **10.04.2013**
(21) Anmeldenummer: 09008670.3
(22) Anmeldetag: 02.07.2009
(51) Int. Cl.: F28C 1/14, F28F 25/12

(54) **Hybridkühlturm**
Hybrid cooling tower
Tour de refroidissement hybride

(30) Priorität: 03.07.2008 DE 102008031220
(43) Veröffentlichungstag der Anmeldung: 06.01.2010
(73) Patentinhaber: GEA Energietechnik GmbH, 44809 Bochum (DE)
(72) Erfinder: Schulze, Heinrich, Dr., 45549 Sprockhövel (DE)
(74) Vertreter: Griepenstroh, Jörg

(56) Entgegenhaltungen:
- DE-A1- 19 611 627
- FR-A1- 2 234 540
- US-A- 2 247 514

## Beschreibung

Die Erfindung betrifft einen Hybridkühlturm einer Hybridkühlanlage gemäß den Merkmalen im Oberbegriff von Patentanspruch 1 und ein Verfahren zum Betreiben eines Hybridkühlturms gemäß den Merkmalen des Patentanspruchs 17.

Aus der DE 196 11 627 A1 ist ein gattungsgemäßer Hybridkühlturm bekannt. Ein solcher Hybridkühlturm oder auch Hybridzelle oder Zellenkühlturm genannt, ist zusammen mit anderen baugleichen "Zellen" in der Regel Bestandteil einer größeren Hybridkühlanlage und kombiniert eine Nass-/Trockenkühlung von Wasserdampf. Hybridkühlanlagen werden eingesetzt, wenn eine reine Nasskühlung nicht in Frage kommt. Gründe hierfür können Belästigungen durch sichtbare Schwaden sein.

Ein Hybridkühlturm lässt sich in vier Sektionen unterteilen: Nassteil, Trockenteil, Mischkammer und Maschinenanlage. Die Maschinenanlage befindet sich oberhalb der Mischkammer und umfasst als wesentliches Element einen Ventilator mit zugehöriger Antriebseinheit. Der Ventilator saugt Kühlluft von unten in die Mischkammer ein. Unterhalb der Mischkammer befindet sich der Nassteil mit einem Wasserverteilsystem. Von unten wird daher ein "nasser" Luftstrom angesaugt. Seitlich der Mischkammer befinden sich Wärmetauscher, insbesondere Rippenrohrbündel, durch welche das Kühlwasser geleitet wird. Aus diesem Bereich wird somit "trockene" Luft angesaugt, die sich in der Mischkammer mit dem "nassen" Luftstrom zu einem möglichst schwadenfreien Abluftgemisch vermischt.

Das grundlegende Ziel bei der Auslegung eines Hybridkühlturm ist es, mit möglichst geringem Materialeinsatz und minimalem Druckverlust im Hinblick auf die Ventilatordimensionierung eine möglichst effektive, d.h. optimale Vermischung der Feuchtluft mit der Trockenluft zu erreichen. Schwadenfrei arbeitende Hybrid- oder Zellkühltürme, lassen sich nach bisherigen Kenntnissen nur mittels zusätzlicher Ventilatoren für den Trockenteil erreichen.

Die Anmelderin hat zahlreiche Untersuchungen an einer typischen Ausführung einer so genannten Zelle bzw. Mischkammer mit den Abmessungen 15 m x 13 m vorgenommen. Sowohl am unteren Einlass für die feuchte Luft als auch am Einlass für die trockene Luft wurden gleichmäßige, d.h. konstante Geschwindigkeitsprofile angenommen, da Untersuchungen gezeigt haben, dass dies als realistisch anzusehen ist. Ausgehend von der DE 196 11 627 A1 wurde festgestellt, dass pyramidenstumpfförmige Mischeinbauten, bei denen eine Dachfläche der Mischeinbauten quergeschlitzt ist, also permanente Öffnungen aufweist, nicht in jedem Fall zu optimalen Mischergebnissen führen. Dies ist insbesondere bei der so genannten Back-to-Back-Anordnung der Fall, bei welcher in eine Mischkammer nur von einer Seitenwand Mischeinbauten ragen können, da die einander benachbarte Mischkammem gewissermaßen Rücken an Rücken (Back-to-Back) stehen.

Der Erfindung liegt somit die Aufgabe zu Grunde, einen Hybridkühlturm dahingehend weiterzuentwickeln, dass sowohl im Einzelbetrieb, als auch in einer Back-to-Back-Anordnung ein möglichst schwadenarmer, am besten schwadenfreier Betrieb ermöglicht wird, wobei zudem die Druckverluste im Sommerbetrieb reduziert sind.

Diese Aufgabe ist bei dem erfindungsgemäßen Hybridkühlturm durch die Merkmale des Patentanspruchs 1 gelöst.

Die Erfindung wird durch die Merkmale der Unteransprüche in vorteilhafter Weise weitergebildet.

Wesentlich bei dem erfindungsgemäßen Hybridkilhlturm ist, dass in einer trapezförmigen Dachfläche eines Mischeinbaus wenigstens eine Dachöffnung angeordnet ist, wobei Mittel zum Öffnen und Schließen der Dachöffnung vorgesehen sind. Versuche haben gezeigt, dass Öffnungen in der Dachfläche des Mischeinbaus zu einem sehr raschen und starken Abströmen des zweiten, trockenen Luftstroms führen, wobei es zu einer unbefriedigenden Durchmischung und damit zu unerwünschter Schwadenbildung kommen kann. Andererseits steigen die Druckverluste innerhalb der Mischkammer bei geschlossenen Dachflächen an. Es gibt Bemühungen die Geometrie der Mischeinbauten derart zu gestalten, das sowohl im Sommerbetrieb als auch im Winterbetrieb ein schwadenarmer oder sogar ein schwadenfreier Betrieb möglich ist. Die Auslegung eines solchen Mischeinbaus ist allerdings hochkomplex und erfordert umfangreiche Untersuchungen.

Mit der Erfindung ist es möglich, die Mischeinbauten so auszulegen, dass im Winterbetrieb, bei welchem es auf Grund der niedrigeren Außentemperatur zu starker Schwadenbildung kommen kann, eine Auslegung im Hinblick auf Schwadenfreiheit bzw. geringfügige Schwadenbildung möglich ist, was nach neuesten Kenntnissen eine geschlossene Dachfläche der Mischeinbauten erforderlich macht, andererseits jedoch im Sommerbetrieb einen Weg aufzeigt, Druckverluste zu minimieren, so dass die Hybridkühlanlage zumindest im Sommerbetrieb mit einer geringeren Leistungsaufnahme für die Ventilatoren betrieben werden kann.

Wesentlich hierbei ist die Möglichkeit, witterungsabhängig Dachöffnungen in den Mischeinbauten zu öffnen und zu schließen. Dies kann automatisch erfolgen, indem die Mittel zum Öffnen und Schließen mit einer Steuerungs- oder Regelungsanordnung verbunden sind. Grundsätzlich können die Mittel zum Öffnen und Schließen auch manuell betätigt werden. Die Dachöffnung kann sogar so groß sein, wie die gesamte Dachfläche, Die Dachöffnung kann z.B. durch eine Jalousie geöffnet oder geschlossen werden. Das Öffnen und Schließen der Dachöffnungen kann unabhängig von der sonstigen Geometrie der pyramidenstumpfförmigen Mischeinbauten erfolgen.

Es wird jedoch als besonders zweckmäßig angesehen, wenn insbesondere für die Auslegung der Mischeinbauten im Winterbetrieb zusätzlich Öffnungen in den Seitenwänden der Mischeinbauten vorgesehen werden.

Es hat sich überraschenderweise gezeigt, dass ein schwadenarmer und sogar ein schwadenfreier Betrieb ermöglicht werden kann, wenn in wenigstens einer der trapezförmigen Seitenwände des Mischereinbaus eine Öffnung angeordnet ist. Die Anordnung, Form und Größe der Öffnung hat entscheidenden Einfluss auf die Schwadenbildung und ist für jeden Einsatzfall exakt zu bestimmen.

Eine "Öffnung" im Sinne der Erfindung ist jeder luftdurchlässige Bereich in der Seitenwand, unabhängig von der Größe, Form oder Lage. Eine "Seitenwand" ist derjenige Bereich des Mischeinbaus, der von der Ober- und Unterseite sowie Eintritts- und Austrittsseite begrenzt ist. Die Seitenwand kann porös sein und daher eine Vielzahl kleiner Öffnungen/Poren aufweisen oder auch nur eine einzige oder auch mehrere größere Öffnungen besitzen.

Es wird als sehr vorteilhaft angesehen, wenn die wenigstens eine Öffnung sich bis zur Unterseite erstreckt. Es handelt sich dabei gewissermaßen um eine zur Unterseite hin offene Nut in der Seitenwand. Weniger gute Effekte werden erzielt, wenn die Öffnungen nicht zur Unterseite hin offen sind.

Ferner hat es sich als vorteilhaft erwiesen, wenn wenigstens eine Öffnung sich bis zur Austrittsseite erstreckt. Eine solche Öffnung könnte gewissermaßen als Horizontalschlitz bezeichnet werden. Es wird jedoch als günstig angesehen, wenn die Öffnung nicht nur zur Austrittsseite, sondern zugleich zur Unterseite hin offen ist. Das heißt nicht, dass die gesamte Seitenwand des Mischeinbaus geöffnet sein soll. Lediglich ein Teilbereich der Seitenwand, welcher kleiner ist, als die Seitenwand soll am austrittsseitigen Ende des Mischeinbaus ausgespart werden. Hierbei kann es sich beispielsweise auch um eine Öffnung handeln, die eine geringere Höhe aufweist, als die Seitenwand. Grundsätzlich ist es jedoch auch denkbar, dass die Öffnung genauso hoch ist, wie die Seitenwand, d.h. sich von der Unterseite bis zur Dachfläche erstreckt. Anders ausgedrückt kann wenigstens eine Seitenwand kürzer ausgestaltet sein als die Dachfläche.

In vorteilhafter Weiterbildung ist eine erste Öffnung in einem Abstand von der Eintrittsseite angeordnet, der größer ist als 60% der zwischen Eintrittsseite und Austrittsseite gemessenen Länge des Mischeinbaus. Diese erste Öffnung befindet sich somit vorzugsweise näher am austrittsseitigen Ende als an den Eintrittsseiten des Mischeinbaus.

Zusätzlich kann eine zweite Öffnung kleineren Querschnitts in der der ersten Öffnung gegenüberliegenden Seitenwand angeordnet sein. Diese zweite Öffnung sollte mindestens um den Faktor 2 kleiner sein als der Querschnitt der ersten Öffnung. Die Position der zweiten Öffnung hat ebenfalls großen Einfluss auf die Schwadenbildung.

Entweder können die erste Öffnung und die zweite Öffnung unmittelbar gegenüberliegend angeordnet sein, d.h. sich in gleichen Abstandsbereichen von der Eintrittsseite befinden. Alternativ kann die zweite Öffnung zur ersten Öffnung versetzt angeordnet sein, d.h. dass sich die Öffnungen nicht unmittelbar gegenüberliegen, so dass sich ihre Abstandsbereiche, gemessen von der Eintrittsseite, nicht überlappen.

Bei dem erfindungsgemäßen Hybridkühlturm ist zu berücksichtigen, dass bei einer Back-to-Back-Anordnung nur eine Kammerwand der Mischkammer mit Mischeinbauten versehen werden kann. Hierbei wird es gemäß einer ersten Ausführungsform als zweckmäßig angesehen, wenn an einer Kammerwand der Mischkammer zwei Mischeinbauten nebeneinander angeordnet sind, die sich über die gesamte Breite der Kammerwand erstrecken. Die jeweils erste seitliche Öffnung der Mischeinbauten soll dabei in den einander benachbarten Seitenwänden der Mischeinbauten angeordnet sein, wobei die zweite Öffnung in den äußeren Seitenwänden angeordnet ist. Die größeren Öffnungen befinden sich daher im mittleren Bereich der Mischkammer und führen hier zu einer intensiven Durchmischung des ersten und zweiten Luftstroms. Lediglich ein kleinerer Teilluftstrom wird über die jeweils außenliegenden Seitenwände über die zweiten Öffnungen abgegeben. Diese Ausgestaltung der Mischeinbauten ist ein sehr guter Kompromiss zwischen Schwadenfreiheit und Druckverlusten, insbesondere bei einer Back-to-Back-Anordnung der Mischkammern.

Ergänzend kann in den einander benachbarten Seitenwänden, d.h. den inneren Seitenwänden mit der ersten größeren Öffnung jeweils noch eine weitere Öffnung, die so genannte dritte Öffnung angeordnet werden, deren Querschnittsfläche allerdings um den Faktor 2 - 10 kleiner sein soll als die Querschnittsfläche der ersten Öffnung. Die erste Öffnung liegt der Austrittsseite näher als diese dritte Öffnung.

Die Schwadenbildung ist nicht nur abhängig von der Lage, Größe und Geometrie der Öffnungen, sondern auch von der sonstigen Geometrie des pyramidenstumpfförmigen Mischeinbaus und insbesondere von den thermodynamischen Randbedingungen, wie z.B. der Geschwindigkeit und der Impulsstromdichte der Fluide. Es wird als zweckmäßig angesehen, wenn die Höhe der den Strömungskanal des pyramidenstumpfförmigen Mischeinbaus umschreibenden Pyramide dem Abstand der gegenüberliegenden Kammerwände der Mischkammer entspricht. Damit die Druckverluste nicht zu hoch werden, soll die in Horizontalrichtung gemessene Länge des Mischeinbaus in einem Bereich von 55% - 85% der ebenfalls in Horizontalrichtung gemessenen Höhe der Pyramide entsprechen. Mit anderen Worten erstreckt sich der Mischeinbau über 55% - 85% der Länge der Mischkammer, da die Höhe der Pyramide dem Abstand der Kammerwände der Mischkammer entsprechen soll.

Zwar führt der Einbau zweier Mischeinbauten zu einem höheren Fertigungs- und Materialaufwand, als der Einbau eines einzigen Mischeinbaus, allerdings bringt ein einziger Mischeinbau mit geschlossener Dachfläche relativ hohe Druckverluste mit sich, so dass sich bei Verwendung nur eines einzigen Mischeinbaus, dieser lediglich über 55%-75% der Höhe der den Mischeinbau beschreibenden Pyramide erstrecken soll. Die Tendenz geht hierbei zu den unteren Grenzwerten. Bei zwei nebeneinander angeordneten Mischeinbauten, sollte deren Länge in einem Bereich von 7%-80% der Höhe der umschreibenden Pyramide liegen.

Bei porösen Seitenwänden können bis zu 50% der Fläche der Seitenwand von Öffnungen/Poren gebildet sein. Die Öffnungen/Poren können homogen oder inhomogen verteilt sein.

Es ist auch möglich, die Unterseite nicht vollständig offen, sondern eintrittsseitig zu etwa 1/4-1/3 geschlossen, d.h. luftundurchlässig auszuführen, um die Durchmischung mit der feuchten Luft weiter in den mittelbaren Bereich der Mischkammer zu verlagern. Die Unterseite soll aber überwiegend, d.h. größtenteils offen sein.Der erfindungsgemäße Hybridkühlturm ermöglicht auch bei niedrigen Außentemperaturen einen schwadenarmen und bei optimaler Auslegung auch schwadenfreien Betrieb, ohne dass zusätzliche Ventilatoren im seitlichen Bereich der Mischkammer erforderlich sind.

Im Sommerbetrieb, d.h. bei höheren Außentemperaturen, ist grundsätzlich mit einer weitaus geringeren Schwadenbildung zu rechnen als im Winterbetrieb. Um die Druckverluste im Sommerbetrieb zu senken, kann in erfindungsgemäßer Weiterbildung vorgesehen sein, dass in die trapezförmige Dachfläche wenigstens eine verschließbare Dachöffnung eingegliedert ist. Theoretisch ist es sogar möglich, bei sehr hohen Außentemperaturen die Dachfläche komplett oder zumindest in sehr großen Teilen zu öffnen, um die Druckverluste zu minimieren.

Die Erfindung betrifft auch ein Verfahren zum Betreiben eines Hybridkühlturms, wobei die Dachöffnungen bei erhöhten Umgebungstemperaturen (Sommerbetrieb) zumindest teilweise öffnen und bei fallenden Umgebungstemperaturen (Winterbetrieb) zumindest teilweise geschlossen werden. Das Öffnen und Schließen kann automatisiert, in Abhängigkeit von einer Stell- oder Regelgröße erfolgen.

Grundsätzlich soll es im Rahmen der Erfindung auch möglich sein, weitere Öffnungen in den Seitenwänden anzupassen, d.h. in Form, Lage oder Größe zu verändern, indem an den Öffnungen verstellbare Elemente angeordnet werden.

Die Erfindung wird nachfolgend anhand von in den Zeichnungen dargestellten, schematischen Ausführungsbeispielen näher erläutert. Es zeigen:
- Figur 1: im schematischen, vertikalen Querschnitt einen Hybridkühlturm mit einem pyramidenstumpfförmigen Mischeinbau;
- Figuren 2a-d: eine erste Ausführungsform zweier Mischeinbauten;
- Figuren 3a-d: eine weitere Ausführungsform zweier Mischeinbauten und
- Figuren 4a-d: eine dritte Ausführungsform eines Mischeinbaus.

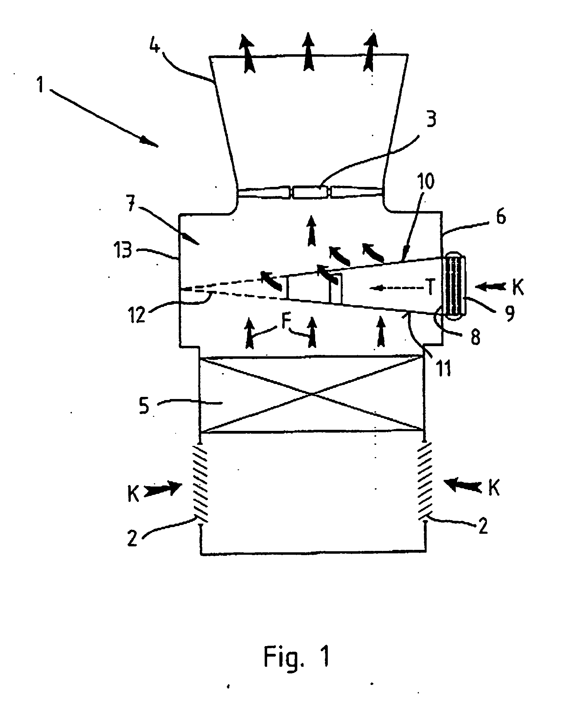

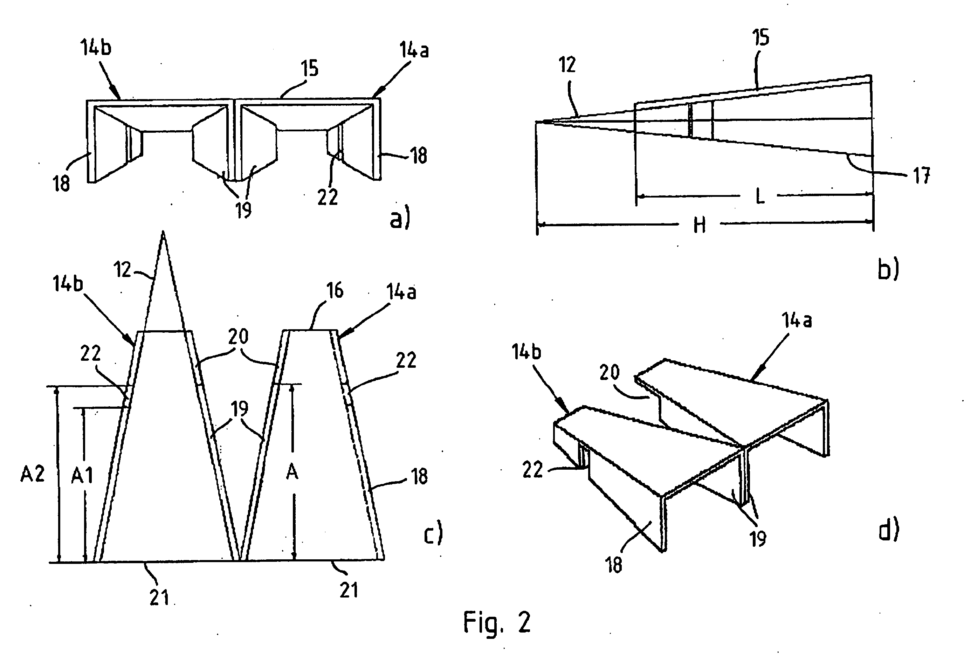

Figur 1 zeigt einen Hybridkühlturm 1, bei welcher heißes Wasser einerseits im direkten Austausch und andererseits im indirekten Austausch mit Kühlluft K gekühlt wird. Der im horizontalen Querschnitt rechteckig ausgebildete Hybridkühlturm 1 weist in einem unteren Höhenbereich seitliche Eintrittsöffnungen 2 auf, über welche Kühlluft K in den Hybridkühlturm 1 gelangt. Die Kühlluft K wird über einen Ventilator 3 angesaugt, der im oberen Bereich des Hybridkühlturms 1 unterhalb eines Diffusors 4 angeordnet ist. Die über die Eintrittsöffnung 2 in den Hybridkühlturm 1 tretende Kühlluft K durchströmt Nasskühlelemente 5, die in einer horizontalen Ebene in den Mybridkühlturm 1 eingegliedert sind. Im Bereich der Nasskühlelemente 5 nimmt die Kühlluft K durch den direkten Kontakt mit dem zu kühlenden Wasser Feuchtigkeit auf, so dass aus den Nasskohlelementen 5 ein feuchter erster Luftstrom F nach oben steigt. In einem Höhenbereich oberhalb der Nasskohlelemente 5 ist eine weitere Eintrittsöffnung 8 für Kühlluft K vorgesehen. Außenseitig der Eintrittsöffnung 8 sind in vertikaler Ausgestaltung Trockenkühlelemente 9 angeordnet. Der aus den Trockenkühlelementen 9 tretende, trockene Luftstrom T wird durch Mischeinbauten 10 kanalisiert und in den Zentralbereich der Mischkammer 7 oberhalb der Nasskühlelemente 5 eingeleitet. Der Mischeinbau 10 ist pyramidenstumpfförmig konfiguriert, wie nachfolgend anhand der Figuren 2 bis 4 erläutert wird. Der Mischeinbau 10 ist in diesem Ausführungsbeispiel an seiner Unterseite 11 vollständig offen, so dass der erste, feuchte Luftstrom F sich bereits innerhalb des Mischeinbaus 10 mit dem trockenen Luftstrom T vermischen kann. Die vermischten Luftströme treten durch den Diffusor 4 aus der Hybridkühlanlage 1 aus.

Es ist zu erkennen, das eine den pyramidenstumpfförmigen Mischeinbau 10 umschreibende Pyramide 12 eine Höhe aufweist, die dem Abstand zwischen der in der Bildebene rechten Kammerwand 6 und in der Bildebene linken Kammerwand 13 entspricht. Der Mischeinbau 10 selber besitzt eine geringere Länge, die in einem Bereich von 55%-85% der Höhe der Pyramide 12 bzw. des Abstands der Kammerwände 6, 13 liegt.

Figur 2 zeigt eine erste Ausführungsform pyramidenstumpfförmiger Mischeinbauten 14a, 14b, die nebeneinander angeordnet in der Mischkammer 7 positioniert sind. Die Mischeinbauten 14a und 14b besitzen die gleiche Breite, Länge und Höhe. Ihre Seitenwände 18 sind allerdings spiegelbildlich konfiguriert. Der Mischeinbau 14a besitzt auf Grund der pyramidenstumpfförmigen Konfiguration eine geschlossene trapezförmige Dachfläche 15, eine offene, rechteckige Austrittsseite 16 und eine offene, trapezförmige Unterseite 17. Dies gilt auch für den Mischeinbau 14b. Jedoch sind jeweils trapezförmige äußere Seitenwände 18 und inneren, einander zugewandte Seitenwände 19 mit Öffnungen versehen. Die Seitenwände 19 besitzen eine Öffnung 20 am austrittsseitigen Ende, die sowohl zur Austrittsseite 16 als auch zur Unterseite 17 hin offen ist. In diesem Ausführungsbeispiel besitzen die Mischeinbauten 14a, 14b eine Gesamtlänge L von 10,5 m bei einer Höhe H der für die Querschnitte maßgeblichen Pyramide 12 von 15 m (Figur 2b). In Figur 2c ist zu erkennen, dass die austrittsseitige Öffnung 20 in der inneren Seitenwand 19 sich im vorderen Viertel des Mischeinbaus 14a, 14b befindet. Konkret beginnt sie bei diesem Ausführungsbeispiel in einem Abstand A von 8 m, gemessen von der Eintrittsseite 21 der Mischeinbauten 14a, 14b. In der gegenüberliegenden, äußeren Seitenwand 18 befindet sich eine weitere Öffnung 22, die als zweite Öffnung bezeichnet werden kann. In diesem Ausführungsbeispiel beginnt die zweite Öffnung 22 in einem Abstand A1 von 7m, gernessen von der Eintrittsseite 21 aus und endet in einem Abstand A2 von 8 m. Die Öffnungen 20, 22 liegen sich somit nicht unmittelbar gegenüber, sondern sind zueinander versetzt angeordnet. Die zweite Öffnung 22 ist ebenfalls zur Unterseite 17 der Mischeinbauten 14a, 14b hin offen und erstreckt sich bis zur Dachfläche 15. Die Querschnittsfläche der zweiten Öffnung 22 ist jedoch wesentlich kleiner als die Querschnittsfläche der ersten Öffnung 20, so dass aus der zweiten Öffnung 22 deutlich weniger Luft austritt als aus der ersten Öffnung 20. Auf der Eintrittsseite 21 ist die Eintrittsöffnung 3,40 m hoch und 5,90 m breit. Der Querschnitt wird zur Austrittsseite 16 hin auf ca. 1,77 m in der Breite und ca. 1 m in der Höhe reduziert. Es sind genau zwei Mischeinbauten 14a, 14b an einer Mischkammerwand angeordnet. Die Mischeinbauten 14a, 14b erstrecken sich über die gesamte Breite einer Mischkammerwand.

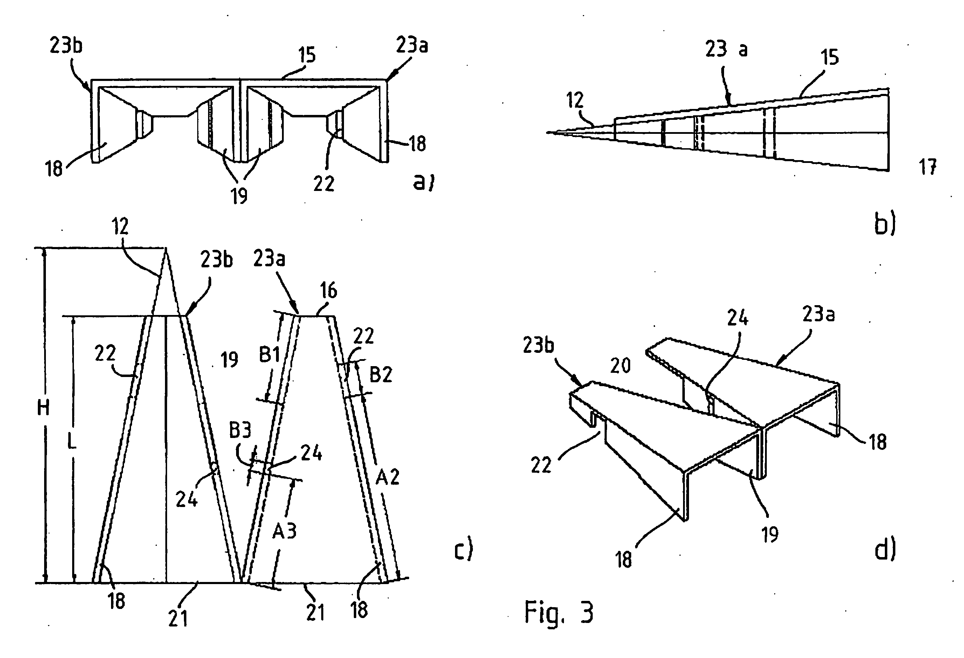

Die Ausführungsform der Figur 3 unterscheidet sich von derjenigen der Figur 2 hinsichtlich der Lage, Anordnung und Anzahl der Öffnungen. Für gleich bleibende Bauteile werden die bereits in den Figuren 1 und 2 eingeführten Bezugszeichen verwendet.

Die dargestellten Mischeinbauten 23a, 23b weisen zusätzlich zu der ersten Öffnung 20 in der inneren Seitenwand 19 eine weitere Öffnung 24 auf, die bezogen auf den jeweiligen Mischeinbau 23a, 23b als dritte Öffnung bezeichnet werden kann. Diese dritte Öffnung 24 ist ebenfalls schlitzförmig konfiguriert, so wie auch die zweite Öffnung 22 in der Seitenwand 18. Um einen schwadenarmen bzw. schwadenfreien Betrieb zu ermöglichen, wurden die Öffnungen 20, 22, 24 in einer besonderen Weise relativ zueinander positioniert. Die austrittsseitige Öffnung 20 ist genauso konfiguriert, wie bei dem Ausführungsbeispiel der Figur 2, besitzt allerdings eine größere Breite B1 von, in diesem Ausführungsbeispiel, 4 m. Hierbei ist allerdings auch zu berücksichtigen, dass die Mischeinbauten 23a, 23b deutlich länger sind als in dem Ausführungsbeispiel der Figur 2. Bei einer angenommenen Pyramidenhöhe H von 15 m besitzen die Mischeinbauten 23a, 23b eine Länge L von 12 m. Sie erstrecken sich somit über 80% der Höhe H der Pyramide 12. Die zweite Öffnung 22 wurde gegenüber dem ersten Ausführungsbeispiel weiter zur Austrittsseite 16 verlagert und liegt nunmehr unmittelbar gegenüber der ersten Öffnung 20. Die zweite Öffnung 22 besitzt eine breite B2 von 1,5 m und befindet sich in einem Abstand A2 von 8,50 m, gemessen von der Eintrittsseite 21. Die dritte Öffnung 24 ist mit einer Breite B3 von 0,50 m nochmals deutlich schmaler. Sie befindet sich in einem Abstand A3 von 5 m gemessen von der Eintrittsseite 21.

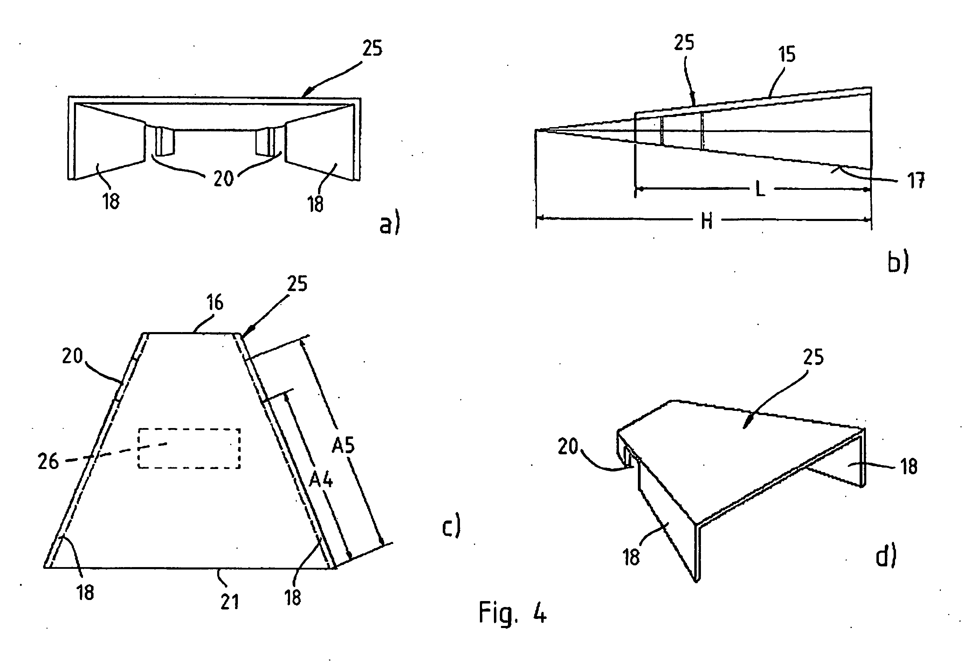

Das Ausführungsbeispiel der Figur 4 sieht anstelle von zwei nebeneinander angeordneten Mischeinbauten nur einen einzigen Mischeinbau 25 vor. Dieser ist dafür doppelt so breit. Konkret ist der Mischeinbau 25 für den Einbau in eine Mischkammer 7 vorgesehen, bei der die Höhe H der Pyramide 12 wiederum 15 m beträgt, entsprechend dem Abstand der Mischkammerwände. Die Breite einer solchen Mischkammer 7 ist mit 13 m genauso groß, wie die Breite des dargestellten Mischeinbaus 25. Bei diesem Typ eines Mischeinbaus 25 ist es nicht erforderlich, die Seitenwände 18, 19 unterschiedlich zu gestalten. Es ist daher in jeder Seitenwand 18, 19 nur eine Öffnung 20 vorgesehen. Die Öffnung 20 ist zur Unterseite 17 des Mischeinbaus 25 hin offen und erstreckt sich schlitzförmig bis zur Dachfläche 15. Sie befindet sich in einem Abstand A4 von 8 m, gemessen von der Eintrittsseite 21 und besitzt eine Breite von 2 m, so dass sie in einem Abstand A5 von 10 m, gemessen von der Eintrittsseite 21 endet.

Bei diesem Ausführungsbeispiel besitzt der Mischeinbau 25 eine Länge L von 10,50 m entsprechend der Ausführungsform der Figur 1, was einem Wert von 70 % der Höhe H der Pyramide 12 entspricht.

Beispielhaft ist in der trapezförmigen Dachfläche 15 des Mischeinbaus 25 eine verschließbare Dachöffnung 26 angeordnet. Die Dachöffnung 26 ist mit gestrichelter Linie eingezeichnet und kann während des Sommerbetriebs geöffnet werden, um den Druckverlust zu vermindern. Im Winterbetrieb ist die Dachöffnung 26 zumindest teilweise, vorzugsweise aber ganz geschlossen. Die dargestellte Dachöffnung 26 ist hinsichtlich der Größe und Anordnung rein exemplarisch zu verstehen. Grundsätzlich können auch weitere Dachöffnungen in der Dachfläche 15 vorgesehen sein. Grundsätzlich schließt die Erfindung auch nicht aus, die gesamte Dachfläche 15 im Sommerbetrieb zu öffnen, beispielsweise durch eine Jalousienanordnung. Die Ausführungen zur Dachöffnung 26 treffen ebenso auf die Ausführungsformen der Figuren 2 und 3 zu.

### Bezugszeichen:

- 1 -: Hybridkühlturm
- 2 -: Einstrittsöffnung
- 3 -: Ventilator
- 4 -: Diffusor
- 5 -: Nasskühlelement
- 6 -: Kammerwand
- 7 -: Mischkammer
- 8 -: Eintrittsöffnung
- 9 -: Trockenkühlelement
- 10 -: Mischeinbau
- 11 -: Unterseite
- 12 -: Pyramide
- 13 -: Kammerwand
- 14a -: Mischeinbau
- 14b -: Mischeinbau
- 15 -: Dachfläche
- 16 -: Austrittsseite
- 17: Unterseite
- 18-: Seitenwand
- 19 -: Seitenwand
- 20 -: erste Öffnung
- 21 -: Eintrittsseite
- 22 -: zweite Öffnung
- 23a -: Mischeinbau
- 23b -: Mischeinbau
- 24 -: dritte Öffnung
- 25 -: Mischeinbau
- 26 -: Dachöffnung
- A1 -: Abstand
- A2 -: Abstand
- A3 -: Abstand
- A4 -: Abstand
- A5 -: Abstand
- B1 -: Abstand
- B2 -: Abstand
- B3 -: Abstand
- H -: Höhe v. 12
- L -: Länge
- K -: Kühlluft
- F -: erster Luftstrom (feuchte Luft)
- T -: zweiter Luftstrom (trockene Luft)

## Patentansprüche

1. Hybridkühlturm, mit einer Mischkammer (7) mit mindestens einem in einen aufsteigenden ersten Luftstrom (F) quer hineinragenden pyramidenstumpfförmigen Mischeinbau (10,14a, 14b, 23a, 23b, 25), welcher dem ersten Luftstrom einen zweiten Luftstrom zuführt, und welcher eine offene trapezförmige Unterseite (11, 17) und eine vollständige oder überwiegend offene rechteckige Austrittsseite (16) aufweist, **dadurch gekennzeichnet, dass** in einer trapezförmigen Dachfläche (15) eines Mischeinbaus (10,14a,14b, 23a, 23b, 25), wenigstens eine Dachöffnung (26) angeordnet ist, wobei Mittel zum Öffnen und Schließen der Dachöffnung (26) vorgesehen sind.

2. Hybridkühlturm nach Anspruch 1, **dadurch gekennzeichnet, dass** in wenigstens einer trapezförmigen Seitenwand (18, 19) des Mischeinbaus (10, 14a, 14b, 23a, 23b, 25) wenigstens eine Öffnung (20, 22, 24) angeordnet ist

3. Hybridkühlturm nach Anspruch 2, **dadurch gekennzeichnet, dass** sich die wenigstens eine Öffnung (20, 22, 24) bis zur Unterseite (17) erstreckt.

4. Hybridkühlturm nach Anspruch 2 oder 3, **dadurch gekennzeichnet, dass** sich die wenigstens eine Öffnung (20) bis zur Austrittseite (16) erstreckt.

5. Hybridkühlturm nach einem der Ansprüche 2 bis 4, **dadurch gekennzeichnet, dass** eine erste Öffnung (20) in einem Abstand von der Eintrittsseite (21) angeordnet ist, der größer ist als 60 % der zwischen Eintrittseite (21) und Austrittsseite (16) gemessenen Länge (L) des Mischeinbaus (10, 14a, 14b, 23a, 23b, 25).

6. Hybridkühlturm nach Anspruch 5, **dadurch gekennzeichnet, dass** eine zweite Öffnung (22) kleineren Querschnitts in der der ersten Öffnung (20) gegenüberliegenden Seitenwand (18) angeordnet ist.

7. Hybridkühlturm nach Anspruch 6, **dadurch gekennzeichnet, dass** der Querschnitt der zweiten Öffnung (22) mindestens um den Faktor 2 kleiner ist als der Querschnitt der ersten Öffnung (20).

8. Hybridkühlturm nach Anspruch 6 oder 7 **dadurch gekennzeichnet, dass** die erste Öffnung (20) und zweite Öffnung (22) unmittelbar gegenüberliegend angeordnet sind.

9. Hybridkühlturm nach Anspruch 6 oder 7, **dadurch gekennzeichnet, dass** die zweite Öffnung (22) zur ersten Öffnung (20) versetzt angeordnet ist.

10. Hybridkühlturm nach einem der Ansprüche 1 bis 9, **dadurch gekennzeichnet, dass** an einer Kammerwand (6) der Mischkammer (7) zwei Mischeinbauten (10, 14a, 14b, 23a, 23b) nebeneinander angeordnet sind, wobei die erste Öffnung (20) in den einander benachbarten Seitenwänden (19) der Mischeinbauten (10, 14a, 14b, 23a, 23b) angeordnet ist und die zweite Öffnung (22) in den äußeren Seitenwänden (18).

11. Hybridkühlturm nach Anspruch 10, **dadurch gekennzeichnet, dass** in den einander benachbarten Seitenwänden (19) jeweils mindestens eine dritte Öffnung (24) angeordnet ist.

12. Hybridkühlturm nach Anspruch 11, **dadurch gekennzeichnet, dass** die Querschnittsfläche der dritten Öffnung (24) um den Faktor 2 bis 10 kleiner ist, als die Querschnittsfläche der ersten Öffnung (20).

13. Hybridkühlturm nach einem der Ansprüche 1 bis 12, **dadurch gekennzeichnet, dass** die Höhe (H) der den pyramidenstumpfförmigen Mischeinbau (10, 14a, 14b, 23a, 23b) umschreibenden Pyramide (12) dem Abstand gegenüberliegender Kammerwände (6, 13) der Mischkammer (7) entspricht.

14. Hybridkühlturm nach Anspruch 13, **dadurch gekennzeichnet, dass** die Länge (L) des Mischeinbaus (10, 14a, 14b, 23a, 23b) in einem Bereich von 55% bis 85% der Höhe (H) der Pyramide (12) entspricht.

15. Hybridkühlturm nach einem der Ansprüche 1 bis 14, **dadurch gekennzeichnet, dass** in der Mischkammer (7) ein einziger, sich über die gesamte Breite einer Kammerwand (6) erstreckender Mischeinbau (25) angeordnet ist, dessen Länge (L) in einem Bereich von 55% bis 75% der Höhe (H) der umschreibenden Pyramide (12) liegt.

16. Hybridkühlturm nach Anspruch 13, **dadurch gekennzeichnet, dass** bei einer Mischkammer (7) mit zwei Mischeinbauten (14a, 14b, 23a, 23b) die Länge (L) der Mischeinbauten (14a, 14b, 23a, 23b) in einem Bereich von 70% bis 80% der Höhe (H) der umschreibenden Pyramiden (12) entspricht.

17. Verfahren zum Berteiben eines Hybridkühlturms mit den Merkmalen eines der Ansprüche 1 bis 16, **dadurch gekennzeichnet, dass** die Dachöffnungen (26) bei erhöhten Umgebungstemperaturen (Sommerbetrieb) zumindest teilweise geöffnet und bei fallenden Umgebungstemperaturen (Winterbetrieb) zumindest teilweise geschlossen werden.

18. Verfahren nach Anspruch 17, **dadurch gekennzeichnet, dass** die Öffnungen (20, 22, 24) der Seitenwände (18, 19) zur Steuerung der Durchmischung in ihrer Lage und/oder Form und/oder Größe verändert werden.

19. Hybridkühlturm nach einem der Ansprüche 1 bis 18, **dadurch gekennzeichnet, dass** die Seitenwand (18, 19) zumindest bereichsweise porös ist.

20. Hybridkühlturm nach einem der Ansprüche 1 bis 19, **dadurch gekennzeichnet, dass** maximal 50% der Seitenwand (18, 19) von Öffnungen (20, 22, 24) gebildet sind.

## Claims

1. Hybrid cooling tower having a mixing chamber (7) with at least one truncated pyramid-like mixing fixture (10, 14a, 14b, 23a, 23b, 25) transversely projected into a rising first air flow (F), which fixture supplies a second air flow to the first air flow and comprises an open trapezoidal lower side (11, 17) and a complete or predominantly open rectangular outlet side (16), **characterised in that** at least one roof opening (26) is arranged in a trapezoidal roof area (15) of the mixing fixture (10, 14a, 14b, 23a, 23b, 25), wherein means are provided to open and close the roof opening (26).

2. Hybrid cooling tower according to claim 1, **characterised in that** at least one opening (20, 22, 24) is arranged in at least one trapezoidal side wall (18, 19) of the mixing fixture (10, 14a, 14b, 23a, 23b, 25).

3. Hybrid cooling tower according to claim 2, **characterised in that** the at least one opening (20, 22, 24) extends through to the lower side (17).

4. Hybrid cooling tower according to claim 2 or 3, **characterised in that** the at least one opening (20) extends through to the outlet side (16).

5. Hybrid cooling tower according to any of claims 2 to 4, **characterised in that** a first opening (20) is arranged at a distance from the inlet side (21) which is greater than 60% of the length (L) measured between the inlet side (21) and the outlet side (16) of the mixing fixture (10, 14a, 14b, 23a, 23b, 25).

6. Hybrid cooling tower according to claim 5, **characterised in that** a second opening (22) of smaller cross-section is arranged in the side wall (18) opposite the first opening (20).

7. Hybrid cooling tower according to claim 6, **characterised in that** the cross-section of the second opening (22) is smaller by a factor of 2 than the cross-section of the first opening (20).

8. Hybrid cooling tower according to claim 6 or 7, **characterised in that** the first opening (20) and second opening (22) are arranged directly opposite each other.

9. Hybrid cooling tower according to claim 6 or 7, **characterised in that** the second opening (22) is arranged offset to the first opening (20).

10. Hybrid cooling tower according to any of claims 1 to 9, **characterised in that** two mixing fixtures (10, 14a, 14b, 23a, 23b) are arranged next to each other on a chamber wall (6) of the mixing chamber (7), wherein the first opening (20) is arranged in the mutually adjacent side walls (19) of the mixing fixtures (10, 14a, 14b, 23a, 23b) and the second opening (22) is arranged in the outer side walls (18).

11. Hybrid cooling tower according to claim 10, **characterised in that** at least one third opening (24) is arranged in each of the mutually adjacent side walls (19).

12. Hybrid cooling tower according to claim 11, **characterised in that** the cross-section area of the third opening (24) is smaller by a factor of 2 to 10 than the cross-section area of the first opening (20).

13. Hybrid cooling tower according to any of claims 1 to 12, **characterised in that** the height (H) of the pyramid (12) surrounding the truncated pyramid-like mixing fixture (10, 14a, 14b, 23a, 23b) corresponds to the distance between opposing chamber walls (6, 13) of the mixing chamber (7).

14. Hybrid cooling tower according to claim 13, **characterised in that** the length (L) of the mixing fixture (10, 14a, 14b, 23a, 23b) in a region corresponds to 55% to 85% of the height (H) of the pyramid (12)ⁱ.

15. Hybrid cooling tower according to any of claims 1 to 14, **characterised in that** a single mixing fixture (25) is arranged in the mixing chamber (7) which extends over the entire width of a chamber wall (6), and the length (L) of which lies in a region of 55% to 75% of the height (H) of the surrounding pyramid (12).

16. Hybrid cooling tower according to claim 13, **characterised in that** in a mixing chamber (7) with two mixing fixtures (14a, 14b, 23a, 23b), the length (L) of the mixing fixtures (14a, 14b, 23a, 23b) in a region corresponds to 70% to 90% of the height (H) of the surrounding pyramid (12).

17. Method for operation of a hybrid cooling tower with the features of any of claims 1 to 16, **characterised in that** the roof openings (26) are at least partly opened at high ambient temperatures (summer mode) and at least partly closed on falling ambient temperatures (winter mode).

18. Method according to claim 17, **characterised in that** position and/or form and/or size of the openings (20, 22, 24) of the side walls (18, 19) are changed in order to control the mixing.

19. Hybrid cooling tower according to any of claims 1 to 18, **characterised in that** the side wall (18, 19) is porous at least in regions.

20. Hybrid cooling tower according to any of claims 1 to 19, **characterised in that** maximum 50% of the side wall (18, 19) is formed by openings (20, 22, 24).

## Revendications

1. Tour de refroidissement hybride, comprenant une chambre de mélange (7) dotée d'au moins un élément mélangeur intégré (10, 14a, 14b, 23a, 23b, 25) en forme de pyramide tronquée, qui s'engage transversalement dans un premier courant d'air ascendant (F), délivre un second courant d'air audit premier courant d'air, et comprend une face inférieure trapézoïdale ouverte (11, 17) et un côté sortie (16) rectangulaire, intégralement ou majoritairement ouvert, **caractérisée par le fait qu'**au moins un orifice de toiture (26) est situé dans une surface trapézoïdale de toiture (15) d'un élément mélangeur intégré (10, 14a, 14b, 23a, 23b, 25), des moyens étant prévus pour l'ouverture et la fermeture dudit orifice de toiture (26).

2. Tour de refroidissement hybride selon la revendication 1, **caractérisée par le fait qu'**au moins un orifice (20, 22, 24) est situé dans au moins une paroi latérale trapézoïdale (18, 19) de l'élément mélangeur intégré (10, 14a, 14b, 23a, 23b, 25).

3. Tour de refroidissement hybride selon la revendication 2, **caractérisée par le fait que** l'orifice (20, 22, 24), à présence minimale, s'étend jusqu'à la face inférieure (17).

4. Tour de refroidissement hybride selon la revendication 2 ou 3, **caractérisée par le fait que** l'orifice (20), à présence minimale, s'étend jusqu'au côté sortie (16).

5. Tour de refroidissement hybride selon l'une des revendications 2 à 4, **caractérisée par le fait qu'**un premier orifice (20) se trouve, par rapport au côté entrée (21), à une distance supérieure à 60 % de la longueur (L) de l'élément mélangeur intégré (10, 14a, 14b, 23a, 23b, 25), mesurée entre ledit côté entrée (21) et le côté sortie (16).

6. Tour de refroidissement hybride selon la revendication 5, **caractérisée par le fait qu'**un deuxième orifice (22), de section transversale plus petite, est situé dans la paroi latérale (18) pointant à l'opposé du premier orifice (20).

7. Tour de refroidissement hybride selon la revendication 6, **caractérisée par le fait que** la section transversale du deuxième orifice (22) est inférieure, d'au moins le facteur 2, à la section transversale du premier orifice (20).

8. Tour de refroidissement hybride selon la revendication 6 ou 7, **caractérisée par le fait que** le premier orifice (20) et le deuxième orifice (22) sont placés directement en vis-à-vis.

9. Tour de refroidissement hybride selon la revendication 6 ou 7, **caractérisée par le fait que** le deuxième orifice (22) est agencé avec décalage par rapport au premier orifice (20).

10. Tour de refroidissement hybride selon l'une des revendications 1 à 9, **caractérisée par le fait que** deux éléments mélangeurs intégrés (10, 14a, 14b, 23a, 23b) sont placés en juxtaposition sur une paroi (6) de la chambre de mélange (7), le premier orifice (20) étant situé dans les parois latérales (19) desdits éléments mélangeurs intégrés (10, 14a, 14b, 23a, 23b) qui sont mutuellement voisines, et le deuxième orifice (22) se trouvant dans les parois latérales extérieures (18).

11. Tour de refroidissement hybride selon la revendication 10, **caractérisée par le fait qu'**au moins un troisième orifice (24) est respectivement situé dans les parois latérales (19) mutuellement voisines.

12. Tour de refroidissement hybride selon la revendication 11, **caractérisée par le fait que** l'aire de section transversale du troisième orifice (24) est inférieure, d'un facteur de 2 à 10, à l'aire de section transversale du premier orifice (20).

13. Tour de refroidissement hybride selon l'une des revendications 1 à 12, **caractérisée par le fait que** la hauteur (H) de la pyramide (12), circonscrivant l'élément mélangeur intégré (10, 14a, 14b, 23a, 23b) en forme de pyramide tronquée, correspond à l'espacement entre des parois (6, 13) de la chambre de mélange (7) qui pointent à l'opposé.

14. Tour de refroidissement hybride selon la revendication 13, **caractérisée par le fait que** la longueur (L) de l'élément mélangeur intégré (10, 14a, 14b, 23a, 23b) correspond à la hauteur (H) de la pyramide (12) dans une plage de 55% à 85% de cette hauteur.

15. Tour de refroidissement hybride selon l'une des revendications 1 à 14, **caractérisée par le fait que** la chambre de mélange (7) renferme un unique élément mélangeur intégré (25) qui s'étend sur toute la largeur d'une paroi (6) de ladite chambre, et dont la longueur (L) se situe dans une plage de 55% à 75% de la hauteur (H) de la pyramide enveloppante (12).

16. Tour de refroidissement hybride selon la revendication 13, **caractérisée par le fait que**, dans le cas d'une chambre de mélange (7) pourvue de deux éléments mélangeurs intégrés (14a, 14b, 23a, 23b), la longueur (L) desdits éléments mélangeurs intégrés (14a, 14b, 23a, 23b) correspond à la hauteur (H) des pyramides enveloppantes (12), dans une plage de 70% à 80% de cette hauteur.

17. Procédé d'actionnement d'une tour de refroidissement hybride dotée des caractéristiques de l'une des revendications 1 à 16, **caractérisé par le fait que** les orifices de toiture (26) sont au moins partiellement ouverts à des températures environnantes accrues (fonctionnement en mode été), et au moins partiellement fermés à des températures environnantes en baisse (fonctionnement en mode hiver).

18. Procédé selon la revendication 17, **caractérisé par le fait que** la position et/ou la forme et/ou la taille des orifices (20, 22, 24) des parois latérales (18, 19) est (sont) modifiée(s) en vue de la commande du brassage.

19. Tour de refroidissement hybride selon l'une des revendications 1 à 18, **caractérisée par le fait que** la paroi latérale (18, 19) est poreuse, au moins par zones.

20. Tour de refroidissement hybride selon l'une des revendications 1 à 19, **caractérisée par le fait que** la paroi latérale (18, 19) est formée par des orifices (20, 22, 24) pour 50% au maximum.
